# EUROPEAN PATENT APPLICATION

(11) **EP 2 733 968 A1**
(43) Date of publication of application: **21.05.2014**
(21) Application number: 12192937.6
(22) Date of filing: 16.11.2012
(51) Int. Cl.: H04W 4/02, H04W 76/02

(54) **Multi-network terminal-proximity discovery**

(71) Applicant: Koninklijke KPN N.V., 2516 CK The Hague (NL); Nederlandse Organisatie voor Toegepast -Natuurwetenschappelijk Onderzoek TNO, 2628 VK Delft (NL)
(72) Inventor: Jorguseski, Ljupco, 2282 TR Rijswijk (NL); Pais, Adrian Victor, 2281 BA Rijswijk (NL)
(74) Representative: Wuyts, Koenraad Maria

(57) **Abstract**

For two mobile communication devices registered with two different communication networks proximity between the devices is determined based on information indicative of geographic location of the mobile communication devices. The proximity is checked on the fulfillment of the condition of being below a predefined threshold. The information regarding the geographic location of each of the mobile communication devices is stored in a distributed database accommodated at the mobile communication devices.

## Description

### FIELD OF THE INVENTION

The invention relates to a method of proximity discovery between a first mobile communication device and a second mobile communication device for initiating a Device-to-Device communication session between the first mobile communication device and the second mobile communication device. The invention also relates to a mobile communication device configured for use in a method of the invention, and to control software for configuring a mobile communication device for use in a method of the invention.

### BACKGROUND ART

The expression "Long Term Evolution", abbreviated to the acronym LTE, is a standard for wireless communication of high-speed data for mobile communication devices such as mobile phones and mobile data terminals. LTE is a successor to the GSM/EDGE and UMTS/HSPA network technologies, increasing the capacity and throughput using new radio access techniques. The standard is developed by the 3rd Generation Partnership Project (3GPP). For background on LTE see, e.g., Technical White Paper "Long Term Evolution (LTE): A Technical Overview", Motorola, 2007*.*

Recent developments in LTE relate to so-called Direct LTE, or: "Device-to-Device" (D2D), communication. In general, D2D communication is characterized by a direct communication path existing between mobile terminals, such as mobile devices, while maintaining, at least at some moments in time, at least a signaling connection between a mobile terminal participating in the D2D communication and a base station of a communication network. The direct communication path between the mobile terminals allows offloading the base station(s), an access network and a core network of the communication network from most of data and signaling exchanged between the mobile terminals. The signaling connection with (the base station of) the communication network allows the communication network to control resources assigned to the D2D communication path between the terminals.

Control of the resources allocated to the D2D communication link (or: path) allows avoiding excessive radio interference between D2D sessions and the other communication sessions via the communication network. For example, radio interference can be avoided by means of assigning nonoverlapping time-frequency resources to the D2D sessions and to the other communication sessions that run via the communication network, and/or by means of controlling the transmission power of the D2D communication link, etc. In essence, this also implies that the scarce frequency spectrum available can be utilized with high efficiency.

Maintaining the signaling connection with the communication network also enables the communication network to control mobility and session control signaling between the mobile communication devices operating in the D2D mode and the communication network. During a D2D session, at least one of the mobile communication devices has preferably a signaling connection with (the base station of) the communication network in order to exchange signaling messages related to, e.g., reconfiguring the D2D communication link, switching between D2D communication and other communication via the communication network, enabling handover to neighbor cells due to mobility, etc. Note that there might be special cases (e.g., in public safety applications), wherein both mobile communication devices involved in the D2D communication do not have network coverage as provided by their operator, whereas these mobile communication devices still can use the D2D communication. In this case, it is not possible to have a signaling connection with the communication network associated with the D2D communication link.

In order to establish D2D communication, the two mobile communication devices (or: terminals) need to discover that they are within each other's vicinity (i.e., proximity) and that they are eligible for setting-up a D2D communication link. This discovery is controlled by a so-called "D2D terminal discovery procedure".

It is easier to implement D2D terminal discovery and to control the setting-up of a D2D communication session between mobile communication devices that are connected to a communication network of the same operator ("single operator"-scenario), than it is between mobile communication devices which are connected to different communication networks of different operators ("multi operators"-scenario). For completeness, it is remarked here that, in practice, a single operator typically owns a single communication network. If a single operator were to own two or more different communication networks, and if the D2D terminal discovery and the control of the setting-up of a D2D communication session were to involve different communication networks of the single operator, the "multi-operators"-scenario would apply.

In the "single operator"-scenario, spectrum management, mobility management, and session management are all conducted within a single domain, wherein information for making decisions is readily available. Also, in the "single operator"-scenario, the discovery and selection of a mobile communication device, with which to set up a D2D communication session, can readily be assisted by the capabilities of the communication network. Such capabilities include identifying and tracking the geographic location of mobile communication devices that need D2D links by means of logging, e.g., tracking area codes and localization information. In the "single operator"-scenario, a single communication network allocates and manages resources (e.g., physical resource blocks) for D2D communications, in order to ensure that interference between the D2D communication links and the links for communicating otherwise in the communication network can be managed. See, e.g., 3GPP TR 22.803, "Feasibility Study for Proximity Services (ProSe), (Release 12)", V0.2.0, February, 2012.

In a "multi operators"-scenario, the D2D discovery and selection procedure, as well as the setting-up of a D2D communication link, are more challenging, as different network operators use different frequency spectra, and the mobility states and other attributes of the terminals may not readily be available to, known by, or shared between different network operators. For completeness, it is remarked here that the expression "mobility state of a mobile communication device" refers to the granularity of the information about the user's geographic location as known at the side of the communication network with which the user has registered. Consider for example a mobile phone network (i.e., a cellular network). In IDLE mode, the mobile communication device is just camping on a particular cell of the cellular network and there is no communication session ongoing between the mobile communication device and the cellular network .The cellular network then knows the geographic location of the mobile communication device on a so-called location area level (e.g., a cluster of cells, typically few tens or hundreds cells, grouped in a single geographical area). In ACTIVE mode, the mobile communication device is involved in an ongoing communication session (e.g., voice communication, video streaming, browsing the Internet, etc.). Then, the cellular network has information about the geographic location of the mobile communication device at the cell level. A cell refers to the coverage area of a particular geographical sector served by a particular base station. A typical base station covers three or more such geographical sectors.

Consider a first mobile communication device that is registered with a first communication network, and a second mobile communication device that is registered with a second communication network, different from the first communication network. A first mobile communication device user and a second mobile communication device user are buddies. That is, the first mobile communication device user and the second mobile communication device user are identified as users for whom the D2D service is enabled, which allows the users, at least at some moments in time, to be discoverable for each other or to hold a D2D communication session with each over.

Network-assisted proximity discovery for enabling D2D communication sessions is addressed in, e.g., US patent application publication 2011/0268101 of Wang et al., titled *"TRANSMISSION AND RECEPTION OF PROXIMITY DETECTION SIGNAL FOR PEER DISCOVERY",* and incorporated herein by reference. US patent application publication 2011/0268101 discloses techniques for performing peer discovery to enable peer-to-peer (P2P) communication. In an aspect, a proximity detection signal used for peer discovery may be generated based on one or more physical channels and/or signals used in a wireless network. In one design, user equipment (UE) may generate a proximity detection signal occupying at least one resource block based on a SC-FDMA modulation technique. In another design, the UE may generate a proximity detection signal occupying at least one resource block based on an OFDMA modulation technique. The UE may generate SC-FDMA symbols or OFDMA symbols in different manners for different physical channels. In yet another design, the UE may generate a proximity detection signal including a primary synchronization signal and a secondary synchronization signal. For all designs, the UE may transmit the proximity detection signal to indicate its presence and to enable other UEs to detect the UE. However, US patent application publication 2011/0268101 does not address the "multi operator"-scenario.

Network-assisted proximity discovery for enabling D2D communication sessions is also addressed in, e.g., US patent application publication 2011/0258327 of Phan et al., titled *"D2D COMMUNICATIONS CONSIDERING DIFFERENT NETWORK OPERATORS",* and incorporated herein by reference. US patent application publication 2011/0258327 discloses maintaining a database of registration information associating mobile communication devices with cells. The cells of the different network operators overlap in a particular geographic area, referred to as the "D2D registration area". Any mobile communication device entering the D2D registration area and desiring to engage in D2D communications is expected to register to a DRSF server, whether to initiate same or to be paged for D2D communications as initiated by another device. The acronym "DRSF" stands for "D2D Registration Server Function". Consider a first mobile communication device that is registered with a first network operator, and a second mobile communication device that is registered with a second network operator, and assume that both the first mobile communication device and the second mobile communication device are present within the D2D registration area. The registration information for the first mobile communication device associates the first mobile communication device with a first cell under control of the first network operator, and the registration information for the second mobile communication device associates the second mobile communication device with a second cell under control of the second network operator. In response to an inquiry from the first network operator that the first mobile communication device desires direct communications with the second mobile communication device, the registration information is used to coordinate between the first network operator and the second network operator in order to facilitate establishment of a direct communication link between the first mobile communication device and the second mobile communication device. In various embodiments the facilitating is enhancing the inquiry/page by adding a cell ID of the cell of the first mobile communication device and adding pre-allocated radio resources in the cell for use by the second mobile communication device in responding to the page, and determining a single network which is not highly loaded and which can allocate resources for the D2D communications and directing one or both of the first mobile communication device and the second mobile communication device to that single network.

### SUMMARY OF THE INVENTION

The inventors have recognized that the approach described in US patent application publication 2011/0258327, discussed above, has several drawbacks.

A first drawback resides in the fact that the DRSF database information and D2D registration areas have to be agreed upon beforehand by the different network operators. Moreover, individual configuration within a mobile operator's network, e.g., to enable updating of the D2D registration area, will be needed as well as broadcasting the identifiers of the D2D registration area so that each mobile communication device can monitor the identifiers of the relevant D2D registration areas and report if the mobile communication device changes from one D2D registration area to another.

A second drawback resides in the fact that there is no mechanism proposed for informing a mobile communication device, registered with a first communication network, that a specific other mobile device registered with another communication network, is within range for D2D communication, and vice versa. The concept proposed in US patent application publication 2011/0258327 is based on the premise that one of the first mobile communication device and the second mobile communication device itself tries to initiate the process for establishing a D2D connection.

A third drawback resides in the fact that the D2D registration areas are static and pre-determined. Consider a case wherein a pair of mobile communication devices, registered with different communication networks, are within D2D range of each other and in neighboring, D2D registration areas. The approach disclosed in US patent application publication 2011/0258327 does not work in case the two mobile communication devices are in different D2D registration areas, although the two mobile communication devices are within D2D range of each other.

The inventors therefore propose an alternative approach that attempts to overcome one or more of these drawbacks, and that hinges on determining proximity of the mobile communication devices, which can, but need not, be used for initiating a D2D communication session.

More specifically, the invention relates to a method of proximity discovery between a first mobile communication device and a second mobile communication device for initiating a Device-to-Device communication session between the first mobile communication device and the second mobile communication device. The first mobile communication device is registered with a first communication network and is configured for receiving a first communication service via the first communication network in a first geographic area. The second mobile communication device is registered with a second communication network, different from the first communication network, and is configured for receiving a second communication service via the second communication network in a second geographic area. The method comprises: receiving first data from the first communication network for determining a first information indicative of a first geographic location of the first mobile communication device; determining a second information indicative of a second geographic location of the second mobile communication device; and determining, using the first information indicative of the first geographic location and the second information indicative of the second geographic location, the proximity between the first mobile communication device and the second mobile communication device, and determining whether the proximity is below a predefined threshold.

Information regarding the first geographic location and the second geographic location is supplied to an entity that thereupon can determine proximity. The entity can be, for example, the operator of the first communication network, or the operator of the second communication network, or an independent service provider, or the second mobile communication device itself, etc. That is, by introducing an entity that receives information regarding the first geographic location and the second geographic location, the proximity can be determined in a standardized and convenient manner, whereas the first communication network and the second communication network may have different (e.g., their own proprietary) procedures for determining the geographic locations of the mobile communication devices of their respective subscribers.

The first information indicative of the first geographic location of the first mobile communication device is determined on the basis of the first data received from the first communication network, whereas the second information indicative of the second geographic location of the second mobile communication device is determined independently of the first communication network, that is without contacting or involving the first communication network.

The information regarding the first geographic location may be determined by the first communication network, or may be uploaded by the first mobile communication device (e.g., as generated by an onboard navigation device such as a GPS device, or as manually entered into the first mobile communication device by the first mobile communication device user via the user-interface of the first mobile communication device). Likewise, the information regarding the second geographic location may be determined by the second communication network, or may be uploaded by the second mobile communication device (e.g., as generated by an onboard navigation device such as a GPS device, or as manually entered into the second mobile communication device by the second mobile communication device user via the user-interface of the second mobile communication device).

With regard to the predefined threshold of the proximity, in an embodiment of the method in the invention, the predefined threshold is made dependent on a practical Device-to-Device communication range of a specific radio communication technology, that is a range that enables D2D communication between mobile communication devices when the specific radio communication technology is used by the mobile communication devices for the D2D communication. The practical D2D communication range of the specific radio communication technology depends on a number of different factors, for example, a multiple access transmission scheme used, modulation/coding schemes used, and an antenna technology used (e.g., whether or not MIMO is used). Furthermore, since spectrum is usually shared with other mobile communication devices, the practical D2D communication range may also vary, e.g., in a system with high interference, one can expect the D2D communication range to be shorter than in a system with less high interference. The predefined threshold may be set based upon the minimum throughput desired for the D2D communication, i.e., for a higher throughput, the predefined threshold would be higher. Further, the predefined threshold may also be dependent on transmission power of the mobile communication devices to be involved in the D2D communication.

In an embodiment of the method, the determining of the second information indicative of the second geographic location comprises receiving from the second communication network second data for determining the second information indicative of the second geographic location; and wherein the method further comprises: using a database for storing at least one first information indicative of the first geographic location and at least one second information indicative of the second geographic location.

In another embodiment of the method, the database of the method, alternatively or additionally to the above embodiment, may be used for storing at least one first data for determining the first information indicative of the first geographic location of the first mobile communication device and at least one second data for determining the second information indicative of the second geographic location of the second mobile communication device.

Accordingly, the proximity discovery comprises determining the proximity between the first mobile communication device and the second mobile communication device using information stored in the database.

In a further embodiment of the method, the method comprises receiving updates of the first data from the first communication network.

In yet further embodiment of the method, the method comprises receiving updates of the first data from the first communication network and updates of the second data from the second communication network. Accordingly, the entity operating the database can keep track of the proximity and the changes therein, based on receiving updates of the first data from the first communication network and the second data from the second communication network. The entity operating the database can be, for example, the operator of the first communication network, or the operator of the second communication network, or an independent service provider, etc. As changes in the proximity are being tracked, the entity running the database may be able to anticipate a magnitude of the proximity becoming relevant to triggering a D2D communication session between the first mobile communication device and the second mobile communication device, if so desired. For example, the entity running the database may request updates from the first communication network and from the second communication network at a higher rate when the proximity tends to close in on a magnitude that enables D2D communication between the first mobile communication device and the second mobile communication device. As another example, an update of the proximity is determined as soon as an update is received of the geographic location of any of the first mobile communication device and the second mobile communication device.

In a further embodiment of the method in the invention, the method comprises at least one of: notifying the first mobile communication device of the proximity of the second mobile communication device and notifying the second mobile communication device of the proximity of the first mobile communication device, if the proximity is below the predefined threshold.

In another embodiment of the method in the invention, the method comprises at least one of: notifying a first mobile communication device user of the proximity of a second mobile communication device user via the first mobile communication device and notifying the second mobile communication device user of the proximity of the first mobile communication device user via the second mobile communication device, if the proximity is below the predefined threshold.

The tracking of the proximity may be used for notifying at least one of the first mobile communication device user and the second mobile communication device user, e.g., as a trigger to attempt setting up a D2D communication session or meeting face-to-face. The notifying may be made dependent on a pre-determined magnitude of the proximity and on a variety of other pre-determined conditions. The other pre-determined conditions as specified above represent a profile of the first mobile communication device user and/or a profile of the second mobile communication device user. For example, the second mobile communication device user may have specified in advance that he/she only wants to be notified of the proximity of this specific first mobile communication device user at certain time slots of certain days of the week and if the second user is present within a certain geographic area centered on the second geographic location at the certain time slots of the certain days. Accordingly, a user (here: the second mobile communication device user) may specify an individual set of conditions per individual one of a plurality of other users (here: including the first mobile communication device user), under which the user wishes to be notified of the proximity of the individual other user.

The notifying of the first mobile communication device user via the first mobile communication device and/or the notifying of the second mobile communication device user via the second mobile communication device may be implemented in a variety of ways. For example, upon determining that, e.g., the second mobile communication device user is to be notified, the second communication network transmits a cue to the second mobile communication device to generate an auditory signal and/or a visual signal via the user-interface of the second mobile communication device. Alternatively, if the second mobile communication device has a graphical user-interface (GUI) with a display monitor, the graphical user-interface presents a representation of a geographical region, with a characteristic dimension of, say ,5 km and centered on the current second geographic location of the second mobile communication device user. Under control of the data received from the second communication network, the GUI indicates the current first geographic location of the first mobile communication device user if the current first geographic location lies within the geographical region, and possibly one or more current further geographic locations of the mobile communication devices of one or more further users that the second mobile communication device user is authorized and willing to track. The user-interface may be controlled to add an auditory alert for each respective one of the first mobile communication device user and the further users when the magnitude of the proximity of the second mobile communication device user to the respective user has decreased below a pre-set threshold.

In another embodiment of the method in the invention, the method comprises the receiving the first data, from the first communication network, via the second communication network at the second mobile communication device; and using a database accommodated at the second mobile communication device for storing at least one first information indicative of the first geographic location.

In another embodiment of the method, alternatively or additionally to the above embodiment, the database accommodated at the second mobile communication device may be used for storing at least one first data for determining the first information indicative of the first geographic location of the first mobile communication device.

In yet another embodiment of the method, the database accommodated at the second mobile communication device may be further used to store at least one second information indicative of the second geographic location of the second mobile communication device.

In the embodiments of three previous paragraphs, the second mobile communication device is configured for itself determining the proximity with the first mobile communication device. The second mobile communication device can keep track of the proximity and the changes therein, based on receiving updates of the first data from the first communication network. Accordingly, the entity operating the database accommodated at the second mobile communication device is the second mobile communication device itself.

In a further embodiment of the method in the invention, the second information indicative of the second geographic location may be determined in a variety of ways. For example, the second mobile communication device is accommodated with, or is connected to, a navigation device, such as a GPS receiver. Upon receipt of the first data, the second mobile communication device may automatically start a procedure for querying the navigation device about the current second geographic location. Alternatively, the second mobile communication device receives second data from the second communication network for determining the second information indicative of the second geographic location of the second mobile communication device. For example, upon receipt of the first data, the second mobile communication device automatically starts a procedure for requesting the second communication network to return to the second mobile communication device information about the current second geographic location. Alternatively, the second mobile communication device receives user-input, representative of the second geographic location, from the second mobile communication device user via a user-interface of the second mobile communication device. For example, upon receiving the first data, the second mobile communication device triggers the user to enter information about the current location of the second mobile communication device. The information entered is then stored at the second mobile communication device as remaining valid for some length of time. The length of time may be under control of the second mobile communication device user and the second geographic location as stored can be changed by the second mobile communication device user via the user-interface at his/her discretion. Upon receipt of updated first data, the stored second geographic location is then used in order to determine the proximity, until the second mobile communication device user replaces the stored second geographic location by a new second geographic location via the user-interface of the second mobile communication device. Alternatively, the second mobile communication device is configured for receiving information about the current second geographic location of the second mobile communication device in a wireless manner from a beacon signal received by the second mobile communication device. Beacons may be implemented, for example, as (short-range) radio beacons and the second mobile communication device is equipped with a suitable receiver for receiving the radio signal of a nearby beacon that is representative of the current second geographic location of the second mobile communication device.

In a further embodiment of the method according to the invention, the method comprises notifying the second mobile communication device of the proximity of the first mobile communication device if the proximity is below the predefined threshold.

In yet further embodiment of the method, the method comprises notifying the second mobile communication device user of the proximity of the first mobile communication device user via the second mobile communication device if the proximity is below the predefined threshold.

The notifying of the second mobile communication device user via the second mobile communication device may be implemented in a variety of ways. For example, upon the second mobile communication device having determined that the second mobile communication device user is to be notified, the second mobile communication device generates an auditory signal and/or a visual signal via the user-interface of the second mobile communication device. Alternatively, if the second mobile communication device has a graphical user-interface (GUI) with a display monitor, the graphical user-interface is controlled to present a representation of a geographical region, with a characteristic dimension of, say, 5 km and centered on the current second geographic location of the second user. The GUI indicates the current first geographic location of the first mobile communication device user if the current first geographic location lies within the geographical region, and possibly one or more current further geographic locations of the mobile communication devices of one or more further users that the second mobile communication device user is authorized and willing to track. The user-interface may add auditory alerts for each respective one of the first mobile communication device user and the further users when the magnitude of the proximity of the second mobile communication device user to the respective user has decreased below a pre-set threshold.

Although a context wherein the invention has been discussed above points to terminal discovery in a mobile phone network, each specific one of the first communication network and the second communication network may comprise any of: a cellular network (or: a mobile phone network), a wireless local area network (WLAN), e.g., a WLAN based on the IEEE 802.11 family of standards), a local wireless communication network based on, e.g., Bluetooth as based on the IEEE 802.15.1 family of standards, etc. Each specific one of the first communication network and the second communication network may even comprise a fixed network, such as Ethernet, that is being used by nomadic, i.e., mobile, users. A nomadic user connects his/her (mobile) communication device, e.g., his/her laptop) to a particular Ethernet hub/socket that is associated to a specific geographic location (e.g., the user's work-place). Accordingly, a first geographic location can be associated with a first communication device connected to a specific hub or socket of the Ethernet-based communication network. The invention thus enables to determine the specific geographic location and to make information available to a second communication device about this specific geographic location of this specific communication device. Note that the other communication device may, but need not be, connected to the same or to another Ethernet-based communication network. As long as the information about the first geographic location is made available by the first-mentioned Ethernet-based communication network, and as long as the second geographic location of the second (mobile) communication device can be determined (e.g., via a GPS receiver at the second communication device itself, via the second communication network, via the second user of the second communication device entering information about his/her geographic location via the user-interface of the second communication device, etc.), the proximity can be determined.

Accordingly, the geographic locations of different mobile communication devices that are registered with different communication networks, whether or not using different network technologies, communication protocols or localization techniques, may be tracked to determine the proximity. For example, the respective geographic locations of a laptop connected to a particular socket of the Ethernet and a mobile phone wirelessly connected to a mobile telephony network may get tracked. Information about the geographic locations may be made available to, e.g., the intermediate entity managing the database, or to the mobile phone, or to the laptop each with their own local database, via one or more network bridges or gateways.

As discussed above, the invention can be commercially exploited as a method. Another way of commercially exploiting the invention comprises making, using, selling, importing, etc., a pre-configured mobile communication device.

Therefore, the invention also relates to a second mobile communication device, wherein: the second mobile communication device is configured to be registered with a second communication network, different from a first communication network, and is configured for receiving a second communication service via the second communication network in a second geographic area. The second mobile communication device is configured to hold a Device-to-Device communication session with a first mobile communication device that is registered with the first communication network in a first geographic area for receiving a first communication service via the first communication network. The second mobile communication device comprises a database for storing at least one first information indicative of a first geographic location of the first mobile communication device. The second mobile communication device is configured to: receive first data from the first communication network and via the second communication network for determining the first information indicative of the first geographic location of the first mobile communication device; determine a second information indicative of a second geographic location of the second mobile communication device; and determine, using the first information indicative of the first geographic location and the second information indicative of the second geographic location, proximity between the first mobile communication device and the second mobile communication device, and to determine whether the proximity is below a predefined threshold.

In another embodiment of the second mobile communication device, the database, alternatively or additionally to the above embodiment, may be used for storing at least one first data for determining the first information indicative of the first geographic location of the first mobile communication device.

The second mobile communication device is configured to determine the second information indicative of the second geographic location of the second mobile communication device in a manner independent of the first communication network.

The second mobile communication device is further configured to receive updates of the first data from the first communication network.

In an embodiment of the second mobile communication device, the determining of the second information indicative of the second geographic location comprises at least one of the following: using a navigation device accommodated at the second mobile communication device; receiving at the second mobile communication device, from the second communication network,_second data for determining the second information indicative of the second geographic location of the second mobile communication device; receiving user-input being representative of the second geographic location, from a second mobile communication device user and via a user-interface of the second mobile communication device; and receiving information about the second geographic location in a wireless manner from a beacon signal received by the second mobile communication device.

In a further embodiment of the second mobile communication device, the second mobile communication device is configured for notifying a second mobile communication device user of the proximity of a first mobile communication device user via the second mobile communication device if the proximity is below the predefined threshold.

Another way of commercially exploiting the invention is by way of making, using, providing, etc., control software for configuring a mobile communication device. The control software may be provided on a computer-readable medium, such as an optical disk, a magnetic disk or a solid-state memory. Alternatively, the control software may be provided as an electronic file that can be downloaded via a data network, e.g., the Internet.

Accordingly, the invention also relates to control software for being installed on a second mobile communication device. The second mobile communication device is registered with a second communication network different from a first communication network, and is configured for receiving a second communication service via the second communication network in a second geographic area. The second mobile communication device is also configured to hold a Device-to-Device communication session with a first mobile communication device that is registered with the first communication network in a first geographic area for receiving a first communication service via the first communication network. The control software comprises: first instructions for receiving first data from the first communication network and via the second communication network and for processing the first data for determining a first information indicative of a first geographic location of the first mobile communication device; second instructions for determining a second information indicative of a second geographic location of the second mobile communication device; and third instructions for determining, using the first information indicative of the first geographic location and the second information indicative of the second geographic location, proximity between the first mobile communication device and the second mobile communication device, and to determine whether the proximity is below a predefined threshold. In an embodiment of the control software in the invention, the determining the second information indicative of the second geographic location of the second mobile communication device is arranged in a manner independent of the first communication network.

In a further embodiment, the control software comprises fourth instructions for using a database accommodated at the second mobile communication device for storing at least one first information indicative of the first geographic location.

In yet further embodiment of the control software, the second instructions comprise at least one of: fifth instructions for using a navigation device accommodated at the second mobile communication device; sixth instructions for receiving at the second mobile communication device, from the second communication network, second data for determining the second information indicative of the second geographic location of the second mobile communication device; seventh instructions for receiving user-input being representative of the second geographic location, from a second mobile communication device user via a user-interface of the second mobile communication device; and eighth instructions for receiving information about the second geographic location in a wireless manner from a beacon signal received by the second mobile communication device.

The determining of the proximity described above can be used in a variety of scenarios. As a first example, the determining of the proximity is used to alert one or both users of the mobile communication devices involved, to the option of starting a D2D communication session. As a second example, the determining of the proximity is used to alert the users, via their mobile communication devices, to their being within each other's vicinity so as determine whether or not to meet face-to-face. As a third example, the determining of the proximity can be used to track the whereabouts of a mobile communication device, and therefore of its user, from another mobile communication device. As a fourth example, the determining of the proximity may be used to determine when to start synchronizing electronic folders and data stored at the mobile communication devices involved, etc.

The following embodiments of the invention address the scenarios where the proximity discovery is performed with a purpose other than establishing a D2D communication session between the mobile communication devices. Accordingly, one of the embodiments of the invention relates to a method of the proximity discovery between a first mobile communication device and a second mobile communication device discovery. The first mobile communication device is registered with a first communication network and is configured for receiving a first communication service via the first communication network in a first geographic area. The second mobile communication device is registered with a second communication network, different from the first communication network, and is configured for receiving a second communication service via the second communication network in a second geographic area. The method comprises: receiving first data from the first communication network for determining a first information indicative of a first geographic location of the first mobile communication device; determining a second information indicative of a second geographic location of the second mobile communication device; and determining, using the first information indicative of the first geographic location and the second information indicative of the second geographic location, the proximity between the first mobile communication device and the second mobile communication device, and determining whether the proximity is below a predefined threshold.

The determining the second information indicative of the second geographic location of the second mobile communication device in the above embodiment is arranged in a manner independent of the first communication network.

In a further embodiment, the method of the proximity discovery comprises the receiving the first data, from the first communication network, via the second communication network at the second mobile communication device and using a database accommodated at the second mobile communication device for storing at least one first information indicative of the first geographic location.

The method of the proximity discovery further comprises receiving updates of the first data from the first communication network.

In yet further embodiment of the method of the proximity discovery, the determining of the second information indicative of the second geographic location comprises at least one of the following: using a navigation device accommodated at the second mobile communication device; receiving at the second mobile communication device, from the second communication network, second data for determining the second information indicative of the second geographic location of the second mobile communication device; receiving user-input being representative of the second geographic location, from a second mobile communication device user and via a user-interface of the second mobile communication device; and receiving information about the second geographic location in a wireless manner from a beacon signal received by the second mobile communication device.

The invention further relates to a second mobile communication device, wherein: the second mobile communication device is configured for determining proximity between a first mobile communication device and the second mobile communication device. The first mobile communication device is registered with a first communication network in a first geographic area for receiving a first communication service via the first communication network. The second mobile communication device is configured to be registered with a second communication network, different from the first communication network, and is configured for receiving a second communication service via the second communication network in a second geographic area. The second mobile communication device comprises a database for storing at least one first information indicative of a first geographic location of the first mobile communication device. The second mobile communication device is configured to: receive first data from the first communication network and via the second communication network for determining the first information indicative of the first geographic location of the first mobile communication device; determine a second information indicative of a second geographic location of the second mobile communication device; and determine, using the first information indicative of the first geographic location and the second information indicative of the second geographic location, proximity between the first mobile communication device and the second mobile communication device, and to determine whether the proximity is below a predefined threshold.

The determining the second information indicative of the second geographic location of the second mobile communication device is arranged in a manner independent of the first communication network.

The second mobile communication device is further configured to receive updates of the first data from the first communication network.

In a further embodiment of the second mobile communication device, the determining of the second information indicative of the second geographic location comprises at least one of the following: using a navigation device accommodated at the second mobile communication device; receiving at the second mobile communication device, from the second communication network, second data for determining the second information indicative of the second geographic location of the second mobile communication device; receiving user-input being representative of the second geographic location, from a second mobile communication device user and via a user-interface of the second mobile communication device; and receiving information about the second geographic location in a wireless manner from a beacon signal received by the second mobile communication device.

### BRIEF DESCRIPTION OF THE DRAWING

The invention is explained in further detail, by way of example and with reference to the accompanying drawing, wherein:
Fig.1 is a block diagram of a first embodiment of a mobile communication system in the invention; and
Fig.2 is a block diagram of a second embodiment of a mobile communication system in the invention.

Throughout the Figures, similar or corresponding features are indicated by same reference numerals.

### DETAILED EMBODIMENTS

For two mobile communication devices registered with two different communication networks proximity between the devices is determined based on information indicative of geographic location of the mobile communication devices. The proximity is checked on the fulfillment of the condition of being below a predefined threshold. The information regarding the geographic location of each of the mobile communication devices is stored in a distributed database accommodated at the mobile communication devices.

### FIRST EMBODIMENT

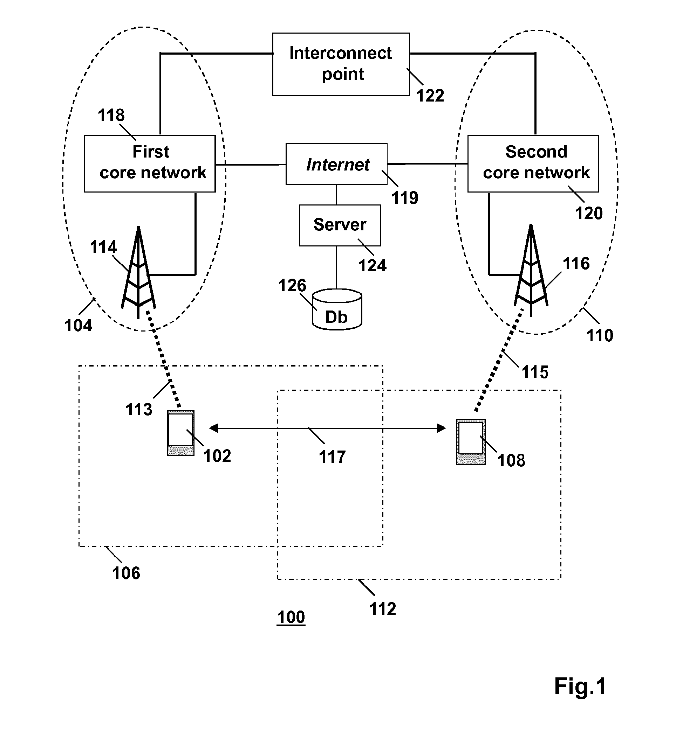

Fig.1 is a diagram of a first embodiment 100 of a mobile communication system. In the first embodiment 100, a first mobile communication device 102 (e.g., a first mobile phone) is registered with a first communication network 104 providing a mobile communication service in a first geographic area 106; and a second mobile communication device 108 (e.g., a second mobile phone) is registered with a second communication network 110 providing a mobile communication service in a second geographic area 112, possibly overlapping with the first geographic area 106. The first communication network 104 has one or more base transceiver stations (BTSs), of which a particular one is illustrated in the diagram of Fig.1 with reference numeral 114. The BTSs of the first communication network 104 are connected to a first core network 118 of the first communication network 104. The second communication network 110 has one or more other BTSs, of which a particular other one is illustrated in the diagram of Fig.1 with reference numeral 116. The BTSs of the second communication network 110 are connected to a second core network 120 of the second communication network 110. The first core network 118 and the second core network 120 are connected via an exchange (also referred to as "interconnect point") 122 for, e.g., routing calls from the first communication network 104 to the second communication network 110 and vice versa.

It is assumed here that the first mobile communication device 102 is switched on so that the first communication network 104 has a first radio connection 113 with the first mobile communication device 102. The first radio connection 113 enables the first communication network 104 to determine which one of the BTSs of the first communication network 104 is to serve the first mobile communication device 102. In the example shown, the BTS 114 is serving the first mobile communication device 102. Likewise, it is assumed here that the second mobile communication device 108 is switched on so that the second communication network 110 has a second radio connection 115 with the second mobile communication device 108. The radio connection 115 enables the second communication network 110 to determine which one of the BTSs of the second communication network 110 is to serve the second mobile communication device 108. The other BTS 116 is serving the second mobile communication device 108. The first user of the first mobile communication device 102 and the second user of the second mobile communication device 108 are buddies. That is, each respective one of the first user and the second user has registered with a Device-to-Device (D2D) service as being buddies of one another. For completeness, and in order to clarify the embodiments discussed with reference to the drawings, the first user and the second user are buddies if the first user and second user are identified as users for whom the D2D service is enabled, which allows the users, at least at some moments in time, to be discoverable for each other and/or to hold a D2D communication session with each over. The first user and the second user can be identified as buddies via authorization, which is allowed or confirmed by the respective one of the operator of the first communication network and the operator of the second communication network. Note that there are many options known in the art for implementing this authorization. See, e.g., 3GPP specification Technical Report TR 22.803 v0.3.0 "Feasibility Study on Proximity-based Services", Section 5.1.1.5 about requirements imposed on a mobile communication device so as to be discoverable or not. Further, if two users are registered as buddies of each over with the D2D service, that means that for each registered user there is a respective mobile communication device associated with a respective user and involved in the D2D service. Therefore, in the embodiments of the invention, where we talk about the geographic location of a user of a mobile communication device or the geographic location of a buddy we understand the geographic location of the mobile communication device. Respectively, where we talk about the proximity between two users or a pair of buddies we understand the proximity between two respective mobile communication devices.

The D2D service enables the first user and the second user to get informed, via the first mobile communication device 102 and the second mobile communication device 108, respectively, when the first mobile communication device 102 and the second mobile communication device 108 are within range of one another so as to be able to in itiate a D2D communication session between the first mobile communication device 102 and the second mobile communication device 108, or to have the option to meet face-to-face. To this end, the first embodiment 100 of the mobile communication system includes a server 124 and a database 126. The server 124 is connected to the first core network 118 and to the second core network 120, e.g., via the Internet 119. For each particular one of the users registered with the D2D service, the database 126 stores a particular identifier of the particular mobile communication device of the particular user, e.g., the mobile telephone number, and one or more other identifiers of other mobile communication devices of one or more other users who have registered with the D2D service and who have declared a buddy-relationship with the particular user.

The server 124 and the database 126 may be managed, for example, by the first operator of the first communication network 104, or by the second operator of the second communication network 110, or by an independent party. Regardless of which party manages the server 124 and the database 126, both the first operator of the first communication network 104 and the second operator of the second communication network 110 are enabled to modify relevant information in the database 126 and/or to retrieve relevant information from the database 126. For completeness, it is remarked here that the first operator and the second operator may, but need not, be one and the same operator. What is relevant here is that the first communication network 104 and the second communication network 110 are different communication networks, e.g., in the sense of using different frequency spectra and/or different mobility state definitions and/or other attributes of the mobile communication devices being served that may not readily be available to, known by, or shared between the different communication networks.

As mentioned earlier, the first communication network 104 may be a first mobile phone network and the second communication network 110 may be a second mobile phone network, different from the first mobile phone network. Alternatively, the first communication network 104 may be a first WLAN, and the second communication network 110 may be a second WLAN. Alternatively, the first communication network 104 may be a first communication network based on, e.g., Bluetooth, and the second communication network 110 may be a second communication network based on Bluetooth, different from the first communication network 104. Alternatively, the first communication network 104 may be a first communication network based on Ethernet and the second communication network 110 may be a second communication network based on Ethernet, different from the first communication network 104. Alternatively, one of the first communication network 104 and the second communication network 110 may be a mobile phone network, and the other one of the first communication network 104 and the second communication network 110 may be any of: a WLAN, a communication network based on Bluetooth, a communication network based on Ethernet. If disparate communication networks are involved, information about geographic locations may be communicated via suitable network bridges or gateways. Accordingly, a particular identifier stored in the database 126 for the particular mobile communication device of a particular user includes a network address that is used in the communication services provided by the respective communication network. The network address is, e.g., the mobile telephone number in case the mobile communication device serves as a mobile telephone, an IP address if the mobile communication device serves as a terminal on an IP network, etc.

In the first embodiment 100, the database 126 also stores for each respective one of the registered users respective information indicative of the geographic location of the respective mobile communication device of the respective registered user. The respective information in the database 126 is updated in case the geographic location of the respective mobile communication device undergoes a change of a relevant magnitude. Whether or not the magnitude is relevant or not depends on pre-determined criterions. When determining proximity for initiating a D2D communication session, the practical range of the radio communication technology used for the D2D communication is relevant for determining whether or not the geographic location of the respective mobile communication device underwent a change which requires an update of the information indicative of the geographic location of the respective mobile communication device.

The geographic location of a particular mobile communication device can be determined, for example, by a GPS (Global Positioning System) receiver at the particular mobile communication device. The particular mobile communication device may then upload its geographic position or a change therein, via the particular communication network serving the particular mobile communication device, and, e.g., the Internet, to the server 124.

The particular mobile communication device may be configured to conditionally upload data such as the geographic position or the change therein depending on, e.g., the rate of change in geographic position. If the geographic position changes relatively fast, the distance covered per unit time may rapidly exceed the practical range of the radio communication technology used for the D2D communication. This may depend on the particular communication network serving the particular mobile communication device, e.g., on the spatial density of the BTSs of the particular communication network, and on the topography of the terrain (hills, mountains, city, open country, etc.).

Alternatively, the particular mobile communication device may be configured to upload data such as its geographic position or change therein unconditionally, e.g., periodically. The server 124 may then determine whether or not the uploaded geographic position or change therein, warrants updating the information in the database 126 about the geographic position of the particular mobile communication device in view of, e.g., the practical range of the radio communication technology used for the D2D communication, the spatial density of the BTSs, the topography of the terrain, etc.

Alternatively, or in addition, information about the geographic location of a particular mobile communication device can be determined, for example, on the basis of the cell identifier of the cell in the particular communication network, being a cellular communication network and serving the particular mobile communication device. The particular mobile communication device may then receive the cell identifier from the particular communication network and upload this cell identifier to the server 124. Another way of having the cell identifier forwarded to the server 124 is implemented by having the particular communication network itself forwarding data such as the cell identifier and the identifier of the particular mobile communication device to the server 124.Other technologies to determine the geographic location of a mobile communication device are based on, e.g., identifying in which cell the mobile communication device is currently located based on the location of the base station of the communication network that receives the strongest signal from the mobile communication device, or on triangulation of the signals from the mobile communication device received at multiple base stations of the communication network.

Consider the example of determining the geographic location of a mobile communication device based on a "best server area" (BSA) of a particular cell/sector. Namely, the geographic location of the mobile communication device is given by identifying the BSA of the particular cell/sector associated with the geographic location of the mobile communication device. The BSA of the particular cell/sector is geographical area (i.e., a collection of geographical positions) for which that particular cell/sector provides the most favourable radio propagation conditions in comparison to all other relevant cells/sectors. More favourable radio propagation conditions could, for example, be a smaller path loss (i.e., lower attenuation) for radio signals transmitted by that cell/sector and received by a terminal (here: a mobile communication device). (It is usually assumed that this also holds for the reverse direction, i.e., for signals transmitted by the terminal and received by the particular cell/sector.) For example, when several cell/sectors transmit with equal power, the BSA of a particular cell/sector (CS1) is the geographical area (the collection of geographical positions) where signals received from that cell/sector (CS1) are received stronger than signals from any other cell/sector. The BSA is usually determined by the operator of the communication network based on propagation analysis, including signal level propagation estimation and/or signal level measurements.

Thus, the approximate geographic area of the location of the mobile communication device is available, for example, in the form of a polygon, e.g., a hexagon, and determined via the geographic coordinates of the vertices defining the polygon. The polygon, e.g., a hexagon ,or other geometrical figure, may be an approximation for the BSA of the cell/sector where the mobile communication device was served by its communication network, or performed a location update.

In practice, the BSAs might be irregular and difficult to approximate with a regular polygon (or a rectangle). In practice, the BSA for the particular cell/sector is based on an aggregation of units of geographical area (referred to as "area pixels") with dimensions of typically 20x20 meters, and some operators even use units of area of 5x5 meters.

For a multi-layer heterogeneous communication network (e.g., a network with a mix of macro-cells, micro-cells, pico-cells, and femto-cells), the details of BSAs at the smaller-sized cells (such as the pico-cells and the femto-cells) might not be available from propagation/planning tools, as these smaller-sized cells might be indoors. However, their BSAs might be deduced from the cell's location and applying some approximated propagation modeling or might even be deduced based on measurements from mobile terminals that are connected to the smaller cells (pico-cells or femto-cells), in combination with measurements from mobile terminals that are connected to macro-cells and micro-cells.

The geographic location of a mobile communication device of a user registered with the D2D service is determined within the communication network to which the user's mobile communication device is currently connected and when, for example, the user's mobile communication device is active, or when the user's mobile communication device had the geographic location updated in the database 126, or when the user's mobile communication device announced its presence for a D2D communication. The communication network to which the user's mobile communication device is currently connected, in its turn, sends data regarding the geographic location of the mobile communication device to the server 124, thereby updating the server 124 and/or the database 126 with more recent data on the geographic location of the mobile communication device in comparison with the data saved in the database 126. The updates of the data regarding the geographic location of the mobile communication device may be received from the communication network, for example, periodically and/or upon request of the server 124. Alternatively or additionally, the updates of the data may be sent conditionally depending on, e.g., the rate of change in geographic position of the mobile communication device.

Accordingly, the database 126 stores information about the geographic locations of the registered users of the D2D service. Per particular one of the users registered with the D2D service, the database 126 stores, for example, the identifier of the mobile communication device of the particular user (e.g., the telephone number of the particular user's mobile telephone), an information indicative of the geographic location of the mobile communication device of this particular user, as well as, for each specific user registered as a buddy of the particular user, the identifier of the mobile communication device of this buddy (e.g., the telephone number of this buddy's mobile telephone), and an information indicative of the geographic location of the mobile communication device of this buddy. This information can then be used to determine proximity between a pair of buddies, i.e., between mobile communication devices of the users registered as the pair of buddies . The proximity between the pair of buddies is conveniently determined as soon as the information about the geographic location of any of the buddies has been updated in the database 126.

The server 124 may be configured to determine whether the proximity between a pair of buddies, i.e., the first mobile communication device 102 and the second mobile communication device 108, is below a predefined threshold. The predefined threshold may be dependent on a practical Device-to-Device communication range of the radio communication technology used for the D2D communication. For example, if the proximity falls within the practical range of the radio communication technology used for the D2D communication, it may serve as an indication that a D2D communication session can be initiated between the first mobile communication device 102 and the second mobile communication device 108. The predefined threshold may also be dependent on transmission power of at least one of the mobile communication devices to be involved in the D2D communication session. That is, depending on the transmission power of a mobile communication device, the mobile communication device can cover different size area using the D2D communication of the particular radio communication technology, respectively, different threshold may be needed to defined the proximity between the mobile communication devices which would allow the D2D communication.

If the proximity between a pair of buddies, e.g., the first user of the first mobile communication device 102 and the second user of the second mobile communication device 108, that is the proximity between the first mobile communication device 102 and the second mobile communication device 108 is below the predefined threshold, a D2D connection 117 can then be set up between the first mobile communication device 102 and the second mobile communication device 108.

If the proximity between a pair of buddies, e.g., the first user of the first mobile communication device 102 and the second user of the second communication device 108, is below the predefined threshold, that is the proximity between the first mobile communication device 102 and the second mobile communication device 108 is below the predefined threshold, the first user may be notified via the first communication network 104 and the first mobile communication device 102, and/or the second user may be notified via the second communication network 110 and the second mobile communication device 108.

Thus, the server 124 has received in advance data from the first communication network 104 for determining a first information indicative of the first geographic location of the first mobile communication device 102, and other data from the second communication network 110 for determining a second information indicative of the second geographic location of the second mobile communication device 108. The first information indicative of the first geographic location is determined based on the data received from the first communication network, whereas the second information indicative of the second geographic location is determined based on the other data received from the second communication network, independently of the first communication network.

The data may be based on the geographic coordinates of the first mobile communication device 102; and the other data may be based on the other geographic coordinates of the second mobile communication device 108.

Alternatively, the data received at the server 124 from the first communication network 104 relates to a specific BSA of the first communication network 104 associated with the geographic location of the first mobile communication device 102; and the other data relates to the another specific BSA of the second communication network 110 associated with the other geographic location of the second mobile communication device 108. Accordingly, the first communication network 104 may have uploaded data representative of the specific BSA (e.g., an identifier of the specific BSA in a pre-determined list of BSAs of the first communication network 104 and stored at the server 124; or the geographic coordinates of the vertices of a polygon representative of the specific BSA). Similarly, the second communication network 110 may have uploaded other data representative of the other specific BSA (e.g., another identifier of the other specific BSA in another pre-determined list of BSAs of the second communication network 110 and stored at the server 124; or the other geographic coordinates of the vertices of another polygon representative of the other specific BSA.

If the proximity is below the predefined threshold, the server 124 may notify the first communication network 104 and/or the second communication network 110. In response to receiving the notification from the server 124, the first mobile communication network 104 may then notify the first user via the first mobile communication device 102 and/or the second communication network 110 may then notify the second user via the second mobile communication device 108.

Alternatively, the first operator of the first communication network 104 and/or the second operator of the second communication network 110 may access the database 126, for example via the server 124 in order to check if the proximity between the geographic location of the first mobile communication device 102 and the geographic location of the second mobile communication device 108 known to the database 126 is below the predefined threshold. If the first communication network 104 determines that the proximity is below the predefined threshold, the first communication network 104 may notify the first user via the first mobile communication device 102; and if the second communication network 110 determines that the proximity is below the predefined threshold, the second communication network 110 may notify the second user via the second mobile communication device 108.

If needed, and depending on the accuracy of the proximity determination (see next paragraph below), further signaling might be exchanged between the first communication network 104 and the second communication network 110 in order to determine the proximity more accurately or reliably, and/or in order to determine more reliably if a D2D link is possible at all, by way of a kind of secondary feasibility check. If this secondary feasibility check results in high probability of a successful D2D communication session, the buddies are notified via their respective communication networks of their mutual proximity and of the possibility to engage in a D2D communication session.

As to the accuracy of the proximity determination: if only the approximate geographic areas of geographic locations of mobile communication devices are available at the database 126, then the probability of having a successful D2D communication between two buddies is determined, for example, as the ratio of a magnitude of an overlap of the respective approximate geographic areas of the respective buddies (i.e., the ratio of a magnitude of an overlap of the respective approximate geographic areas of the buddies' respective mobile communication devices) to a magnitude of the area covered by the two approximate geographic areas combined. If this ratio is high (e.g., higher than 80%) and the overlapping area is sufficiently small (e.g., smaller than 400 m², depending on the practical communication range of the D2D wireless technology used), then a D2D communication session is possible between the respective mobile communication devices of the respective buddies. The buddies may be notified via their respective networks of their mutual proximity and of the possibility to engage in a D2D communication session. Thus, the defined above value of the ration and the overlapping may be used as the predefined proximity threshold. If this ratio is moderate (e.g., between 50% and 80%), and/or the overlapping area is considerable (e.g., larger than 400 m²), then further signaling/measurements are exchanged between, on the one hand, each of the respective mobile communication devices of the respective buddies and, on the other hand, the server 124 in order to determine the proximity more accurately. For example, each of the mobile communication devices of a pair of buddies is configured to transmit special signals, or: beacons. A first special signal transmitted by one of the mobile communication devices of the pair of buddies gets received by the other one of the mobile communication devices of the pair of buddies. The receiving mobile communication device can then analyze the first special signal received in order to determine if the mobile communication devices are within D2D range. The receiving mobile communication device may then send a second special signal to the mobile communication device that transmitted the first special signal in order to confirm receipt.

For more background on using such signaling procedures for determining if two mobile communication devices, which are being served by one and the same communication network, are within D2D range, please see, e.g., US patent application publication 2011/0258327, mentioned above, or International application publication WO 2011/147462, titled *"Method and Apparatus for Device-to-Device Communications"* or the publication *"*Design Aspects of Network Assisted Device-to-Device Communications", Gábor Fodor et al., IEEE Communications Magazine, March 2012, pp. 170-117, mentioned above. If the ratio (of the magnitude of an overlap of the respective approximate geographic areas of the respective buddies, i.e., the magnitude of an overlap of the respective approximate geographic areas of the buddies' respective mobile communication devices, to a magnitude of the area covered by the two approximate geographic areas combined) is lower than, e.g., 50%, then a D2D communication session is not possible between the respective mobile communication devices of the respective buddies. The buddies are not notified of their proximity, and there is no additional signaling to support determining if the two buddies are within D2D range. In this way, additional signaling between the operators is avoided to agree on the exchange of the special signals/beacons between the mobile communication devices of the buddies, and the transmission of the special signals/beacons can be limited. However, the buddies may be notified that they are beyond the predefined proximity threshold and no D2D communication session is currently possible.

As to the publication *"*Design Aspects of Network Assisted Device-to-Device Communications", Gábor Fodor et al., it is remarked here that the publication addresses only single-network scenarios whereas the invention is concerned with multiple-network scenarios. Also note that, in order to discover whether two mobile communication devices of the buddies are within D2D range, the publication either specifies that the two mobile communication devices are tuned to the same broadcast channel or that they have already been engaged in a communication session via the same communication network.

### SECOND EMBODIMENT

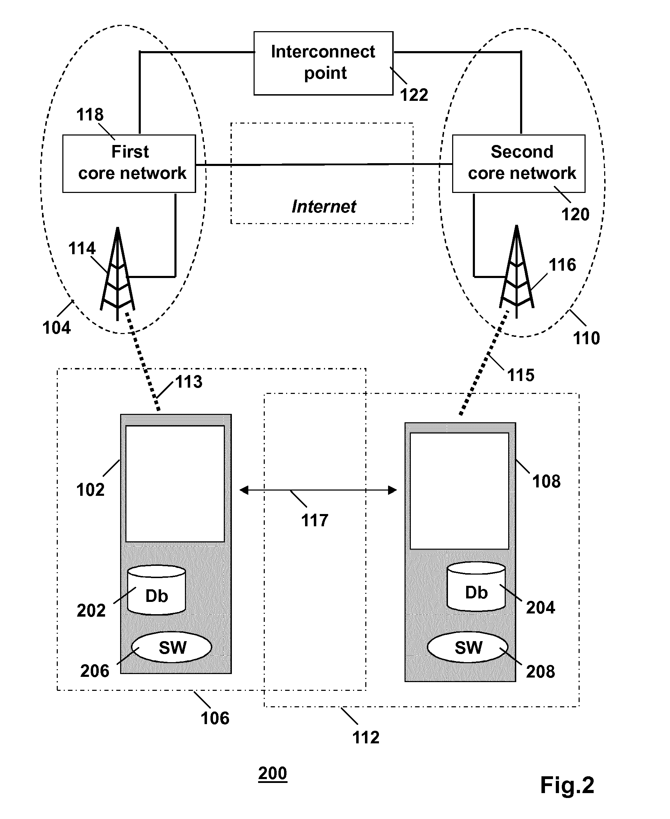

Fig.2 is a diagram of a second embodiment 200 of a mobile communication system. The second embodiment 200 has features in common with the first embodiment 100 of Fig.1. The features that the second embodiment 200 has in common with the first embodiment 100 will not be discussed separately with reference to Fig.2, as these common features have already been discussed with reference to Fig.1 above. As in the first embodiment, the first user of the first mobile communication device 102 and the second user of the second mobile communication device 108 are buddies.

As discussed above, the first embodiment 100 has a centralized database 126, accessible by the operator of the first communication network 104 and by the operator of the second communication network 110. In contrast, the second embodiment 200 has a distributed database, in the sense of being formed by databases implemented locally at the mobile communication devices, such as a first database 202 at the first mobile communication device 102 and a second database 204 at the second mobile communication device 108. The first database 202 is implemented using an onboard memory (not shown separately), e.g., a solid-state memory, or part thereof, of the first mobile communication device 102. Similarly, the second database 204 is implemented using an onboard memory (not shown separately), e.g., a solid-state memory, or part thereof, of the second mobile communication device 102. The first database 202 stores a respective information indicative of the geographic location of the mobile communication device of a respective one of the buddies of the first user of the first mobile communications device 102. The first database 202 also stores respective identifiers of the mobile communication devices of the respective buddies of the first user. Likewise, the second database 204 stores a respective information indicative of the geographic location of the mobile communication device of a respective one of the buddies of the second user of the second mobile communications device 108. The second database 204 also stores respective identifiers of the mobile communication devices of the respective buddies of the second user. Several ways of determining the geographic location of a mobile communication device have been discussed above with reference to the diagram of Fig.1.

For example, the first communication network 104 may determine the first geographic location of the first mobile communication device 102 as discussed above. The first communication network 104 forwards first data about the first geographic location of the first mobile communication device 102 to the second communication network 110, e.g., via the exchange 122 or via any other means of communication between the first communication network 104 and the second communication network 110 such as the Internet, and the second communication network 110 forwards the first data to the second mobile communication device 108. The first communication network 104 forwards first data, for example, upon a change, or upon a significant change, in the first geographic location of the first mobile communication device 102. A similar procedure applies, mutatis mutandis, to the determining of the second geographic location of the second mobile communication device 108 and to the forwarding of the second data about the second geographic location of the second mobile communication device 108 to the first mobile communication device 102.

As another example, the first mobile communication device 102 has a GPS receiver onboard and is therefore configured to determine the first geographic location of the first mobile communication device 102. The first mobile communication device 102 then communicates the first data regarding the first geographic location to the first communication network 104, from where the first data are forwarded via the second communication network 110 to the second mobile communication device 108. A similar procedure applies, mutatis mutandis, to the second mobile communication device 108 if equipped with an onboard navigation device such as a GPS receiver.

Therefore, according to the present embodiment the first mobile communication device 102 receives second data for determining a second information indicative of the second geographic location of the second mobile communication device 108 from the second communication network 110 via the first communication network 104. According to the embodiment, the first mobile communication device 102 is configured to determine a first information indicative of its own geographic location in a manner independent of the second communication network 110.

The first mobile communication device 102 is configured to determine a first information indicative of its own geographic location in one of the following manners: using a GPS receiver accommodated at the first mobile communication device or by receiving at the first mobile communication device, from the first communication network, data for determining the first information indicative of the first geographic location of the first mobile communication device or by receiving user-input being representative of the first geographic location, from a first mobile communication device user and via a user-interface of the first mobile communication device; and receiving information about the first geographic location in a wireless manner from a beacon signal received by the second mobile communication device.

Accordingly, the first mobile communication device 102 may be configured to determine proximity between a pair of buddies, i.e., the first mobile communication device 102 and the second mobile communication device 108, and to determine whether the proximity is below a predefined threshold. The predefined threshold may be dependent on a practical Device-to-Device communication range of the radio communication technology used for the D2D communication. The predefined threshold may also be dependent on transmission power of at least one of the mobile communication devices to be involved in the D2D communication session.

Updates of the data regarding the geographic location of the mobile communication device of each buddy of the first user are signaled to the first mobile communication device 102 via its currently serving communication network, i.e., via the first communication network 104. The updates are signaled via, e.g., downlink signaling messages from the cell, or sector, of the first communication network 104, wherein the first mobile communication device 102 is currently camping, using a specific frequency spectrum allocated for the first communication network 104. Similarly, updates of the data regarding the geographic location of the mobile communication device of each buddy of the second user are signaled to the second mobile communication device 108 via its currently serving communication network, i.e., via the second communication network 110. The updates are signaled via, e.g., downlink signaling messages from the cell or sector of the second communication network 110, wherein the second mobile communication device 108 is currently camping, using a specific frequency spectrum allocated for the second communication network 110. The specific frequency spectrum allocated for the first communication network 104 and the specific frequency spectrum allocated for the second communication network 110 may, but need not, be different spectra.

As this signaling requires over-the-air communication from the cell or sector wherein the receiving one of the first mobile communication device 102 and the second mobile communication device 108 is currently residing in (or: camping on), only those updates might be communicated for buddies, whose mobile communication devices are within a pre-determined proximity from one another. This approach leaves out communicating the updates of the geographic locations of a pair of buddies, if the proximity between their mobile communication devices has a magnitude larger than a pre-determined threshold. If the proximity is larger than the pre-determined threshold, the buddies are probably too far away from one another for a D2D communication session. The pre-determined threshold is based on, e.g., heuristics, and/or on the theoretical range of the wireless D2D communication links.

As discussed with reference to Fig.1, if needed, and depending on the accuracy of the proximity determination, further signaling might be exchanged between the first communication network 104 and the second communication network 110 in order to determine the proximity of the mobile communication devices of a pair of buddies more accurately or reliably, and/or in order to determine more reliably if a D2D link is possible at all, by way of a kind of secondary feasibility check. If this secondary feasibility check results in high probability of a successful D2D communication session, the buddies are notified via their respective communication networks of their mutual proximity and of the possibility to engage in a D2D communication session.

If the first mobile communication device 102 is a generic mobile communication device, e.g., a smartphone, the functionality of conditionally alerting the first user to the proximity of his/her buddy can be implemented by installing first control software 206. The control software controls the maintaining of the first database 202, the processing of the updates received on the second geographic location of the second mobile communication device 108, the determining of the proximity and the conditionally alerting of the first user of the first mobile communication device 102 of the proximity of the second mobile communication device 108, as discussed above. Similar considerations apply, mutatis mutandis, with respect to the configuring the second mobile communication device 108 by means of second control software 208.

In the above example, discussed with reference to Figs.1 and 2 , the determining of the proximity is used to determine whether or not a D2D communication session is possible between the mobile communication devices and to alert one or both users of the mobile communication devices involved to the option to start a D2D communication session. Alternatively, the determining of the proximity may also be used for other purposes, for example: to alert the users to their being in each other's vicinity so as to present the option of meeting face-to-face; or to track the whereabouts of a mobile communication device; etc.

The examples illustrated in Figs.1 and 2 show two mobile phone networks. As mentioned previously, the invention is not limited to proximity detection of mobile phones in two different mobile phone networks, as each specific one of the first communication network and the second communication network may comprise any of: a cellular network (or: a mobile phone network), a wireless local area network (WLAN), e.g., a WLAN based on the IEEE 802.11 family of standards), a local wireless communication network based on, e.g., Bluetooth as based on the IEEE 802.15.1 family of standards, etc. Each specific one of the first communication network and the second communication network may even comprise a fixed network, such as Ethernet, that is being used by nomadic, i.e., mobile, users. A nomadic user connects his/her (mobile) communication device, e.g., his/her laptop) to a particular Ethernet hub/socket that is associated to a specific geographic location (e.g., the user's work-place). Accordingly, a first geographic location can be associated with a first communication device connected to a specific hub or socket of the Ethernet-based communication network. The invention thus enables to determine the specific geographic location and to make information available to a second communication device about this specific geographic location of this specific communication device. Note that the other communication device may, but need not be, connected to the same or to another Ethernet-based communication network. As long as the information about the first geographic location is made available by the first-mentioned Ethernet-based communication network, and as long as the second geographic location of the second (mobile) communication device can be determined (e.g., via a GPS receiver at the second communication device itself, via the second communication network, via the second user of the second communication device entering information about his/her geographic location via the user-interface of the second communication device, etc.), the proximity can be determined.

## Claims

1. A method of proximity discovery between a first mobile communication device (102) and a second mobile communication device (108) wherein:
the first mobile communication device is registered with a first communication network (104) and is configured for receiving a first communication service via the first communication network in a first geographic area (106);
the second mobile communication device is registered with a second communication network (110), different from the first communication network, and is configured for receiving a second communication service via the second communication network in a second geographic area (112);
the method comprises:
receiving first data from the first communication network for determining a first information indicative of a first geographic location of the first mobile communication device;
determining a second information indicative of a second geographic location of the second mobile communication device; and
determining, using the first information indicative of the first geographic location and the second information indicative of the second geographic location, the proximity between the first mobile communication device and the second mobile communication device, and determining whether the proximity is below a predefined threshold.

2. The method of claim 1, wherein:
the determining the second information indicative of the second geographic location of the second mobile communication device is arranged in a manner independent of the first communication network.

3. The method according to claim 1 or 2, further comprising:
the receiving the first data, from the first communication network, via the second communication network at the second mobile communication device;
using a database (204) accommodated at the second mobile communication device for storing at least one first information indicative of the first geographic location.

4. The method according to any one of claims 1, 2, or 3, further comprising:
receiving updates of the first data from the first communication network.

5. The method according to any one of claims 1 to 4, wherein the determining of the second information indicative of the second geographic location comprises at least one of the following:
using a navigation device accommodated at the second mobile communication device;
receiving at the second mobile communication device, from the second communication network, second data for determining the second information indicative of the second geographic location of the second mobile communication device;
receiving user-input being representative of the second geographic location, from a second mobile communication device user and via a user-interface of the second mobile communication device; and
receiving information about the second geographic location in a wireless manner from a beacon signal received by the second mobile communication device.

6. A second mobile communication device (108), wherein:
the second mobile communication device (108) is configured for determining proximity between a first mobile communication device (102) and the second mobile communication device (108), wherein the first mobile communication device is registered with a first communication network (104) in a first geographic area (106) for receiving a first communication service via the first communication network;
the second mobile communication device is configured to be registered with a second communication network (110), different from the first communication network (104), and is configured for receiving a second communication service via the second communication network (110) in a second geographic area (112);
the second mobile communication device comprises a database (204) for storing at least one first information indicative of a first geographic location of the first mobile communication device (102);
the second mobile communication device is configured to:
receive first data from the first communication network and via the second communication network for determining the first information indicative of the first geographic location of the first mobile communication device;
determine a second information indicative of a second geographic location of the second mobile communication device; and
determine, using the first information indicative of the first geographic location and the second information indicative of the second geographic location, proximity between the first mobile communication device and the second mobile communication device, and to determine whether the proximity is below a predefined threshold.

7. The second mobile communication device (108) of claim 6, wherein:
the determining the second information indicative of the second geographic location of the second mobile communication device is arranged in a manner independent of the first communication network.

8. The second mobile communication device (108) of claim 6 or 7, further configured to:
receive updates of the first data from the first communication network.

9. The second mobile communication device (108) according to any one of claims 6 to 8, wherein the determining of the second information indicative of the second geographic location comprises at least one of the following:
using a navigation device accommodated at the second mobile communication device;
receiving at the second mobile communication device, from the second communication network, second data for determining the second information indicative of the second geographic location of the second mobile communication device;
receiving user-input being representative of the second geographic location, from a second mobile communication device user and via a user-interface of the second mobile communication device; and
receiving information about the second geographic location in a wireless manner from a beacon signal received by the second mobile communication device.
